# EUROPÄISCHE PATENTSCHRIFT

(11) **EP 1 637 386 B1**
(45) Veröffentlichungstag und Bekanntmachung des Hinweises auf die Patenterteilung: **31.10.2007**
(21) Anmeldenummer: 04022007.1
(22) Anmeldetag: 16.09.2004
(51) Int. Cl.: B60K 35/00

(54) **Anzeigevorrichtung und Verfahren zur Anzeige für ein Fahrzeug**
Display device and method for a vehicle
Dispositif et procédure d'affichage pour véhicule

(43) Veröffentlichungstag der Anmeldung: 22.03.2006
(73) Patentinhaber: DaimlerChrysler AG, 70327 Stuttgart (DE)
(72) Erfinder: Kokes, Michael, Dr., 69168 Wiesloch (DE); Ludwig, Ralf, 70567 Stuttgart (DE); Oeffinger, Bernd, 70734 Fellbach (DE)

(56) Entgegenhaltungen:
- EP-A- 1 323 571
- DE-A1- 4 213 129
- DE-C1- 19 633 417
- DE-U1- 20 101 933

## Beschreibung

Die Erfindung betrifft eine Anzeigevorrichtung für ein Fahrzeug gemäß dem Oberbegriff des Anspruchs 1 sowie ein Verfahren zur Anzeige für ein Fahrzeug gemäß dem Oberbegriff des Anspruchs 15.

Die DE 199 38 690 A1 offenbart ein Display, welches vom Fahrzeugnutzer mit einem zugehörigen Schaltelement oder automatisch bei Inbetriebsetzung des Fahrzeugs aufgeklappt wird.

Die DE 41 28 663 beschreibt eine Anzeigevorrichtung, zur Darstellung und zum Abrufen fahrzeugbezogener Informationen, mit einem Display, das zwischen zwei Positionen automatisch verrückbar ist. Zur Darstellung von Warnhinweisen wird das Display in die zweite Position verrückt, um durch diese Bewegung die Aufmerksamkeit des Fahrzeugführers hervorzurufen.

Die US 2003/0128103 A1 beschreibt eine Anzeigevorrichtung für ein Fahrzeug, welche ein Display zur Darstellung von Daten von Applikationen für einen Fahrzeugnutzer, wie beispielsweise Videodaten, umfasst sowie Schwenkmittel zum Verrücken des Displays zwischen zwei Positionen. Nachteilig an diesem bekannten Stand der Technik ist jedoch, dass der Fahrzeugnutzer spezielle Bedienelemente betätigen muss, um das Display zwischen den verschiedenen Positionen zu verrücken. Weiterhin ergibt sich das Problem, dass das Display vom Fahrzeugnutzer in eine solche Position verrückbar ist, in der es die Sicht des Fahrzeugnutzers auf die Straße beeinträchtigen und somit eine Gefährdung der Fahrsicherheit bedeuten könnte.

Eine Anzeigevorrichtung mit den Merkmalen des Anspruchs 1 bzw. ein Verfahren zur Anzeige mit den Merkmalen des Anspruchs 15 ist bekannt aus DE-A-19633417.

Aufgabe der vorliegenden Erfindung ist es, die genannten Probleme zu beseitigen.

Erfindungsgemäß ist vorgesehen, dass weiterhin von der Anzeigevorrichtung umfasst sind Prüfmittel, zur Prüfung, ob die Darstellung von Daten einer vom Fahrzeugnutzer selektierten Applikation im aktuellen Fahrzeugzustand zulässig ist, sowie Freigabemittel, zur Freigabe der Schwenkmittel und zur Ansteuerung des Displays entsprechend der oder jeder vom Fahrzeugnutzer selektierten Applikation, wenn das Prüfmittel ein bejahendes Signal abgibt. Dabei wird als Fahrzeugnutzer insbesondere, aber nicht ausschließlich, der Fahrzeugführer betrachtet.

Anders ausgedrückt muss der Fahrzeugnutzer keine speziellen Bedienelemente betätigen, um die Schwenkmittel zum Verrücken (Ortsveränderung durch eine Bewegung wie bspw. Drehen oder Schwenken) des Displays freizugeben, was den Komfort erhöht. Auch ist das Display nicht ständig, mit Inbetriebsetzung des Fahrzeugs bzw. plötzlich - ohne eine konkrete Handlung des Fahrzeugnutzers - im Sichtbereich des Fahrzeugnutzers, was die Verkehrssicherheit erhöht. Vielmehr selektiert der Fahrzeugnutzer lediglich in üblicher Weise eine gewünschte Applikation indem er bspw. eine Nachtsicht-Applikation oder ein DVD-Abspielgerät startet. Die selektierte Applikation steuert dann selbsttätig die Prüfmittel an, zur Prüfung ob die Darstellung von Daten dieser Applikation, bspw. Videodaten, auf dem Display unter den derzeitigen Bedingungen zulässig ist. Nur in diesem Fall werden die Schwenkmittel vom Freigabemittel entsprechend freigegeben; anderenfalls erfolgt keine entsprechende Freigabe.

Der Vorteil der Erfindung liegt im gesteigerten Komfort, indem der Fahrzeugnutzer zur Darstellung der Daten keine speziellen Bedienelemente betätigen muss, sondern lediglich in üblicher Weise die von ihm gewünschte Applikation im Fahrzeug selektiert. Weiterhin ist die Verkehrssicherheit in jeder Situation gewährleistet, indem weder die Aufmerksamkeit noch die freie Sicht des Fahrzeugnutzers auf die Straße behindert werden, sondern ein Verrücken des Displays nur dann vorgesehen ist, wenn daraus keine Beeinträchtigung der Verkehrssicherheit resultiert. Dadurch, dass nur ein Display zur Darstellung der Daten für verschiedene Fahrzeugsysteme eingesetzt zu werden braucht, ergeben sich Kosten- und Platzvorteile sowie eine Bündelung von darzustellender Information an einer Stelle im Fahrzeug.

In einer besonders bevorzugten Ausführungsform der Erfindung ist ein Display vorgesehen, welches ein bequemes Betrachten von Fernseh- bzw. Filmbildern in einem Fahrzeug ermöglicht. Ein solches "Homelike-Entertainment" ist besonders auf ein großformatiges Display angewiesen. Allerdings ist ein derartiges Display in einer zur Betrachtung von Fernseh- bzw. Filmbildern geeigneten Position (in "ausgefahrenem" Zustand) ein Risiko für die Verkehrssicherheit. Denn in ausgefahrenem Zustand ist durch das Display die Sicht des Fahrzeugführers auf die Straße beeinträchtigt. Deshalb ist vorgesehen, dass vor dem Verrücken des Displays zur Darstellung der Fernsehbeziehungsweise Filmdaten vorab geprüft wird, ob das Fahrzeug sich im Stillstand befindet. Nur in diesem Fall ist das Display in eine zur Betrachtung von Fernseh- bzw. Filmbildern geeignete Position verrückbar, d.h. ausfahrbar.

Stillstand kann dabei auch bedeuten, dass das Fahrzeug steht ohne dass der Motor abgeschaltet ist. Denn bspw. bei Nutzfahrzeugen läuft häufig im Stand der Motor um verschiedene Aggregate zu versorgen. Weiterhin kann, unter Beachtung geltender Sicherheitsbestimmungen, eine Darstellung von Fernseh- bzw. Filmdaten auf dem Display auch dann vorgesehen sein, wenn das Fahrzeug sich nicht im Stillstand befindet. Dazu wird bspw. das Display nicht in den ausgefahrenen Zustand verrückt sondern lediglich in eine Position, in der es keine Beeinträchtigung für den Fahrzeugführer darstellt bzw. in der ein Betrachten des Displays lediglich für einen Beifahrer möglich ist.

Insbesondere wenn das Fahrzeug ein Nutzfahrzeug ist, also einen relativ großen Fahrerraum aufweist, sind großformatige Displays, d.h. solche mit großer Bildschirmdiagonalen, möglich. Eine Näherungsregel zur Bestimmung einer geeigneten Bildschirmdiagonale besagt, die Bildschirmdiagonale als ein Drittel derjenigen Größe zu wählen, die der Entfernung des Betrachters vom Display entspricht. Bei einer üblichen Nutzfahrzeugkabine wäre dann ein Display mit einer Bildschirmdiagonale von etwa dreiundzwanzig Zoll geeignet. Ein derart großformatiges Display würde in ausgefahrenem Zustand, d.h. in einer für "Homelike-Entertainment" geeigneten Position, die Sicht des Fahrzeugführers auf die Straße und damit die Verkehrssicherheit massiv beeinträchtigen. Dies wird durch die vorliegende Erfindung nun zuverlässig verhindert.

Erfindungsgemäß ist also lediglich ein sowohl applikationsals auch fahrtzustandsabhängiges Verrücken des Displays möglich. Zusätzlich zur Nutzung des Displays für "Homelike-Entertainment" in ausgefahrenem Zustand können eine oder mehrere weitere Positionen des Displays vorgesehen sein. In jedem Fall ist zumindest eine weitere Position ("Fahrposition"), als übliche Position wenn das Fahrzeug fährt, vorgesehen. In dieser Fahrposition des Displays ist insbesondere eine Sichtbeeinträchtigung für den Fahrzeugführer ausgeschlossen und so die Verkehrssicherheit gewährleistet. In der Fahrposition kann vorgesehen sein, dass das Display für den Fahrzeugführer nicht sichtbar ist, bspw. durch im Wesentlichen vollständiges Verrücken des Displays in das Armaturenbrett ("eingefahrene Position"). Dies ergibt eine besonders verkehrssichere und auch optisch ansprechende Lösung. Eine andere Möglichkeit ist ein in Fahrposition nur teilweise ausgefahrenes Display, d.h. es ist nur ein Teil des Displays sichtbar. Auf diesem Teil kann z.B. eine Darstellung von Daten von Fahrerassistenzsystemen vorgesehen sein. Weiterhin kann vorgesehen sein, dass ein Umschalten zwischen den verschiedenen Fahrpositionen des Displays möglich ist, beispielsweise im Rahmen eines Werkstattaufenthalts über eine Diagnoseschnittstelle.

Fahrerassistenzsysteme, beispielsweise ein Nachsichtgerät, eine Rückfahrkamera oder ein Wegleitsystem, benötigen kein so großes Display wie bspw. ein "Homelike-Entertainment". Deshalb ist zur Darstellung der Daten von Fahrerassistenzsystemen das Display bspw. in einer Position vorgesehen, in der nur eine Höhe entsprechend einer relativ kleinen Diagonale, beispielsweise sieben Zoll, sichtbar ist. Diese Displayhöhe ist üblicher Weise ausreichend zur Darstellung der Daten von Fahrerassistenzsystemen. Dabei besteht ein Vorteil eines großen Displays, bspw. eines Displays mit einer Diagonale von dreiundzwanzig Zoll, darin, dass selbst in einer Position in der es die Höhe eines Displays mit einer Diagonale von sieben Zoll aufweist, noch wesentlich breiter ist als ein solches Display von sieben Zoll. Dies ermöglicht es beispielsweise die Daten mehrerer Fahrerassistenzsysteme gleichzeitig auf dem teilweise ausgefahrenen Display darzustellen. So kann der Fahrzeugführer beispielsweise Zielführung und automatische Verkehrszeichenerkennung gleichzeitig nutzen und ist dadurch besonders gut informiert. Alternativ oder zusätzlich ist vorgesehen, Applikationen die auch eine größere Displayfläche nutzen können, bspw. ein Nachtsichtgerät durch eine höhere Bildauflösung, die entsprechende Displayfläche durch eine entsprechende Position des Displays bereitzustellen und so die Darstellung für den Fahrzeugführer weiter zu verbessern. In einer anderen Weiterbildung kann unterschiedlichen nationalen Rechtsvorschriften über das Sichtfeld des Fahrzeugführers dadurch Rechnung getragen werden, dass z.B. beim durch GPS festgestellten Grenzübertritt ein entsprechendes automatisches Verrücken des Displays vorgesehen ist.

Die Möglichkeit der Darstellung verschiedener Displayhöhen ermöglicht es, eine Platz sparende Anzeigemöglichkeit zu realisieren. Es wird nur jeweils so viel Platz, bspw. am Armaturenbrett, belegt, wie gerade nötig ist. Der Sichtbereich des Fahrzeugführers ist stets ungestört da das Display jeweils nur so weit verrückbar ist, wie zur Darstellung der Daten nötig.

Vorzugsweise sind die Schwenkmittel als Gehäuse des Displays ausgebildet. Damit ergibt sich eine besonders einfach realisierbare Bauform.

Eine bevorzugte Ausführungsform der Erfindung sieht vor, dass die Schwenkmittel für ein manuelles Verrücken des Displays ausgebildet sind. Wenn also die Prüfmittel festgestellt haben, dass die Darstellung von Daten einer vom Fahrzeugnutzer selektierten Applikation im aktuellen Fahrzeugzustand zulässig ist, werden die Freigabemittel die Schwenkmittel freigeben derart, dass ein Fahrzeugnutzer das Display an den Schwenkmitteln manuell in eine gewünschte Position verrücken kann. Wenn die Prüfmittel ein entsprechendes Signal nicht abgegeben haben, ist ein entsprechendes Verrücken nicht möglich, beispielsweise durch eine entsprechende Blockierung der Schwenkmittel. Dabei kann das manuelle Verrücken des Displays auch über entsprechende Bedienelemente vorgesehen sein, wobei das Verrücken des Displays durch die Betätigung der Bedienelemente durch den Fahrzeugnutzer z.B. motorisch bewirkt wird. Auch hier ist ein entsprechendes Verrücken des Displays jedoch nur vorgesehen, wenn die Prüfmittel ein entsprechendes Signal abgegeben haben, andernfalls ist ein entsprechendes Verrücken des Displays durch Betätigung der Bedienelemente nicht möglich.

Alternativ oder zusätzlich ist eine weitere bevorzugte Ausführungsform vorgesehen, bei der die Schwenkmittel für ein automatisches Verrücken des Displays ausgebildet sind. Dies bedeutet, dass nachdem die Prüfmittel die Darstellung von Daten einer vom Fahrzeugnutzer selektierten Applikation im aktuellen Fahrzeugzustand als zulässig detektiert haben, die Freigabemittel die Schwenkmittel automatisch derart ansteuern, dass das Display in eine entsprechende Position verrückt wird. Hierfür sind beispielsweise elektrische, hydraulische, piezoelektrische oder andere Mittel vorgesehen.

Eine vorteilhafte Weiterbildung sieht dabei vor, dass wenn ein Fahrzeugzustand sich derart ändert, dass eine selektierte Applikation nicht mehr zulässig ist, die Freigabemittel die Schwenkmittel derart ansteuern, dass die Darstellung der Daten der aktuellen Applikation auf dem Display gestoppt wird und die Schwenkmittel das Display automatisch in eine verkehrssichere Position verrücken. Dies bedeutet beispielsweise, dass wenn der Fahrzeugführer, während er gerade im Stand Fernsehbilder betrachtet, plötzlich Gas gibt um etwa ein Rangiermanöver auf einem Parkplatz zu fahren, das Display automatisch derart verrückt wird, dass der Fahrzeugführer freie Sicht hat und gleichzeitig die Darstellung der Daten gestoppt wird.

Vorteilhaft ist es weiterhin, verschiedene Positionen des Displays derart vorzusehen, dass beispielsweise mit variierender Geschwindigkeit das Display derart automatisch verrückt wird, das bei sich für den Fahrzeugführer ein entsprechend der Geschwindigkeit gewähltes Sichtfeld ergibt.

In einer bevorzugten Ausführungsform ist vorgesehen, dass die Schwenkmittel zum Verschieben und/oder Neigen und/oder Drehen des Displays ausgebildet sind. Insbesondere beim manuellen Verrücken des Displays ermöglicht eine wahlfreie Positionierung des Displays in beliebiger Position es dem Fahrzeugnutzer, sich genau die Position des Displays auszusuchen, die er haben möchte.

Vorzugsweise sind auf dem und/oder beim Display Bedienelemente vorgesehen, da hiermit die dem Fahrzeugführer bereits vorteilhafte Position des Displays es auch ermöglicht einfach die Bedienelemente zu bedienen. Dabei sind beispielsweise Bedienelemente für Kontrast, Helligkeit, Programmwahl oder ähnliches vorgesehen.

In einer bevorzugten Ausführungsform ist vorgesehen, dass wenigstens eine Position von Schwenkmittel und Display im Bereich des Armaturenbretts vorgesehen ist. Das Armaturenbrett ist ein zentral gelegener Bereich im Fahrzeug und dem Fahrzeugnutzer vertraut als mögliche Position von Bedien- und/ oder Anzeigeelementen. Hier sind verschiedene Versionen denkbar, beispielsweise ein Versenken des Displays im Armaturenbrett derart, dass das Display von dem Armaturenbrett heraus nach oben in den Sichtbereich des Fahrzeugnutzers verrückt wird. Eine andere Möglichkeit besteht darin, das Display waagerecht im Armaturenbrett vorzusehen und für den Fall dass es genutzt werden soll es nach vorne zu schieben und dann derart zu drehen, dass das Display vom Fahrzeugnutzer betrachtet werden kann. Es ergibt sich jeweils eine einfache Möglichkeit, das Display für den Fall, das es gar nicht oder nur teilweise gebraucht wird, im Armaturenbrett zu versenken. Dies ergibt eine Platz sparende und optisch ansprechende Lösung.

Eine weitere bevorzugte Ausführungsform sieht vor, dass wenigstens eine Position von Schwenkmittel und Display im Bereich des Fahrzeughimmels vorgesehen ist. Der Fahrzeughimmel ist ein Bereich in dem relativ wenig Bedienelemente angeordnet sind. Es ist also noch genügend Platz zum "Wegstauen" der Schwenkmittel und des Displays vorhanden. Wenn das Display genutzt werden soll, wird es in den Sichtbereich des Fahrzeugnutzers hereingeschwenkt. Wenn es nicht genutzt werden soll, beeinträchtigt es den Sichtbereich des Fahrzeugnutzers nicht.

In einer besonderst bevorzugten Ausführungsform ist vorgesehen, dass die Schwenkmittel derart ausgebildet sind, dass das Display in den Bereich des Lenkrades verrückt werden kann und dass zusätzlich eine dem Display zugeordnete Eingabetastatur ebenfalls in den Bereich des Lenkrades versetzbar ist. Es ergibt sich ein Computerarbeitsplatz für den Fahrzeugnutzer, beispielsweise zum Surfen im Internet, zur Erledigung von Dispositionsaufgaben oder zum Abrufen der E-Mail. Dabei ist sowohl ein automatisches Verrücken als auch ein manuelles Verrücken möglich. Vorteilhaft ist es, erst das Display automatisch in den Bereich des Lenkrades zu verrücken und sodann eine manuelle "Feinjustierung" derart zu erlauben, dass das Display vom Fahrzeugnutzer in eine Position gebracht werden kann, welche ihm angenehm ist. Die Eingabetastatur ist dann entweder vom Fahrzeugnutzer selbst, beispielsweise aus einem Fach, entnehmbar und am Lenkrad befestigbar. Oder es ist vorgesehen, dass die Tastatur automatisch in den Bereich des Lenkrades hinein fährt, beispielsweise aus dem Armaturenbrett oder aus der Fahrertür. Als Eingabetastatur können hier beliebige Eingabemittel vorgesehen sein, beispielsweise eine normale Computertastatur, eine Folientastatur oder ähnliches.

Zusammengefasst ermöglicht es die Erfindung, die verschiedenen Anzeigeaufgaben für einen Fahrzeugnutzer vorteilhaft zusammenzufassen. Die Darstellung von Daten einer ansteigenden Anzahl von Fahrzeugassistenzsystemen sowie von ebenfalls anwachsenden "Homelike-Entertainment" Funktionen wird durch die Erfindung besonders einfach auf einem Display gebündelt. Dabei muss der Fahrzeugnutzer sich nicht um eine entsprechende Positionierung des Displays entsprechend der jeweils darzustellenden Daten kümmern. Vielmehr selektiert er lediglich in üblicher Weise eine entsprechende Applikation. Gleichzeitig ist in jeder Situation sichergestellt, dass der Fahrzeugführer stets den aktuellen gesetzlichen Anforderungen hinsichtlich der Verkehrssicherheit Genüge tut. Denn eine entsprechende Positionierung des Displays ist nur unter Beachtung entsprechender Sicherheitsvorschriften möglich. Hier sind auch vorteilhafte Weiterbildungen denkbar, beispielsweise eine einfache Anpassung an unterschiedliche Sichtanforderungen durch entsprechende Programmierung der Freigabemittel oder ein automatisches Verschwenken des Displays beim Anfahren des Fahrzeuges. Wenn beispielsweise der Fahrzeugführer in einem Verkehrsstau Fernsehbilder betrachtet und plötzlich wieder anfahren muss, verfährt das Display automatisch in eine Position, die die Sicht des Fahrzeugführers nicht beeinträchtigt.

Weiterhin ergibt sich eine Ersparung von Bauraum, indem nur ein einziges Display verwendet werden muss auf dem vielfältige Anzeigeaufgaben darstellbar sind. Es wird jeweils auf die für die aktuelle Anzeigeaufgabe benötigte Größe verschwenkt.

Die Erfindung wird nun anhand einer Zeichnung erläutert. Dabei zeigen:
- Fig. 1: Eine erste Ausführungsform der Erfindung,
- Fig. 2: eine zweite Ausführungsform der Erfindung,
- Fig. 3: eine dritte Ausführungsform der Erfindung,
- Fig. 4: eine vierte Ausführungsform der Erfindung.

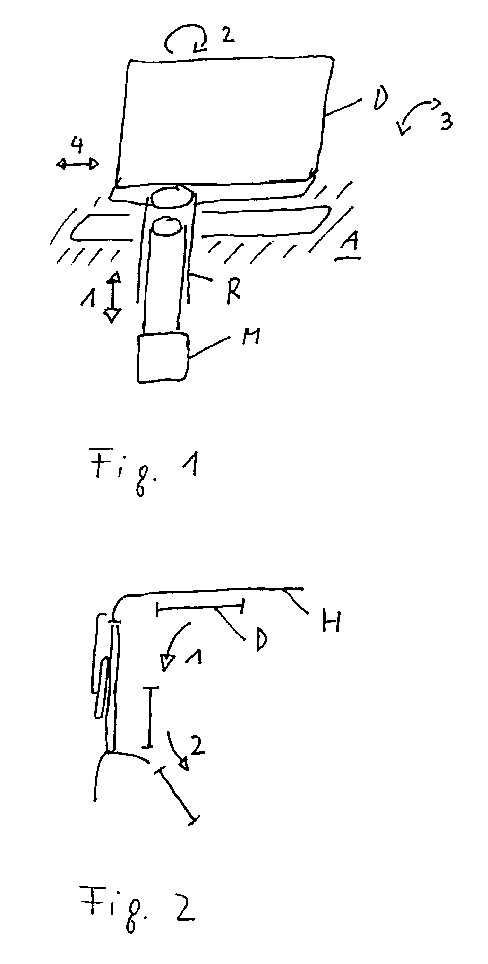

Figur 1 zeigt eine Möglichkeit, das Display D im Bereich des Armaturenbretts A vorzusehen. In dieser speziellen Ausführungsform ist ein Rohr R vorgesehen, an welchem das Display D von einem Motor M automatisch vertikal 1 (nach oben bzw. unten) verfahrbar ist. Weiterhin ist das Display D um das Rohr R drehbar 2 sowie neigbar 3 und nach links und rechts verschiebbar 4, um dem Fahrzeugführer eine angenehme und sichere Betrachtung der auf dem Display D dargestellten Daten zu ermöglichen.

Figur 2 zeigt ein Display D das vom Fahrzeughimmel H herabschwenkbar 1 und dann entsprechend neigbar 2, um den Fahrzeugführer eine angenehme und sichere Betrachtung der auf dem Display D dargestellten Daten zu ermöglichen.

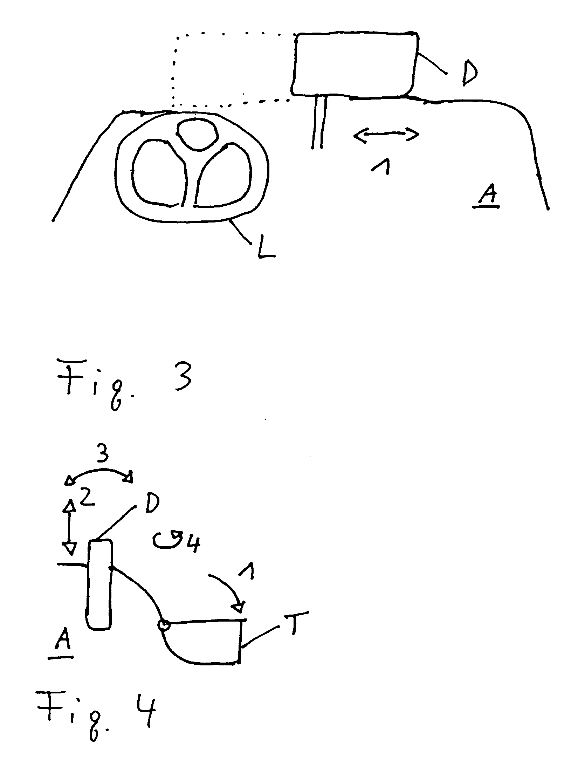

Figur 3 schließlich zeigt die Möglichkeit, in Weiterbildung der Ausführungsform von Figur 1, das aus dem Armaturenbrett A "herausgefahrene" Display D in den Bereich des Lenkrades L zu verrücken 1. Sodann kann eine Computertastatur am Lenkrad vorgesehen sein. Damit ergibt sich ein Computerarbeitsplatz für den Fahrzeugführer, beispielsweise zur Erledigung von Dispositionsaufgaben.

Figur 4 zeigt eine weitere Ausführungsform der Erfindung im Bereich des Armaturenbretts A. Dabei ist vorgesehen, einen Teil T des Armaturenbretts A nach vorne abklappbar zu gestalten und dadurch das Display D für den Fahrzeugnutzer ganz oder teilweise sichtbar zu machen. Das Abklappen 1 kann dabei sowohl automatisch als auch manuell erfolgen. Es können Sensoren vorgesehen sein zur Prüfung, ob ein gefahrloses Abklappen nach vorne möglich ist. Dabei ist das Display D nach dem Abklappen 1 vertikal verfahrbar 2, neigbar 3 und drehbar 4, um dem Fahrzeugführer eine angenehme und sichere Betrachtung der auf dem Display D dargestellten Daten zu ermöglichen. In nicht-abgeklapptem Zustand ist das Display D entweder gar nicht oder nur teilweise für den Fahrzeugnutzer sichtbar.

## Patentansprüche

1. Anzeigevorrichtung für ein Fahrzeug, umfassend ein Display (D), zur Darstellung von Daten von Applikationen für einen Fahrzeugnutzer, und Schwenkmittel (M, R), zum Verrücken des Displays zwischen wenigstens zwei Positionen,
wobei von der Anzeigevorrichtung weiterhin umfasst sind
- Prüfmittel, zur Prüfung, ob die Darstellung von Daten einer vom Fahrzeugnutzer selektierten Applikation im aktuellen Fahrzeugzustand zulässig ist, **gekennzeichnet, durch**
- Freigabemittel, zur Freigabe der Schwenkmittel und zur Ansteuerung des Displays entsprechend der oder jeder vom Fahrzeugnutzer selektierten Applikation, wenn die Prüfmittel ein bejahendes Signal abgeben.

2. Anzeigevorrichtung nach Anspruch 1, wobei die Schwenkmittel als Gehäuse des Displays ausgebildet sind.

3. Anzeigevorrichtung nach Anspruch 1 oder 2, wobei die Schwenkmittel für ein manuelles Verrücken des Displays ausgebildet sind.

4. Anzeigevorrichtung nach einem der Ansprüche 1 bis 3, wobei die Schwenkmittel für ein automatisches Verrücken des Displays ausgebildet sind.

5. Anzeigevorrichtung nach einem der Ansprüche 1 bis 4, wobei die Schwenkmittel zum Verschieben und/ oder Neigen und/ oder Drehen des Displays ausgebildet sind.

6. Anzeigevorrichtung nach einem der Ansprüche 1 bis 5, wobei auf dem und/ oder beim Display Bedienelemente vorgesehen sind.

7. Anzeigevorrichtung nach einem der Ansprüche 1 bis 6, wobei als Applikation die Darstellung der Daten von Fahrerassistenzsystemen auf dem Display vorgesehen ist.

8. Anzeigevorrichtung nach einem der Ansprüche 1 bis 7, wobei das Fahrzeug ein Nutzfahrzeug ist und das Display eine Diagonale von etwa dreiundzwanzig Zoll aufweist.

9. Anzeigevorrichtung nach einem der Ansprüche 1 bis 8, wobei als Applikation die Darstellung von Fernseh- bzw. Filmdaten auf dem Display vorgesehen ist.

10. Anzeigevorrichtung nach Anspruch 9, wobei die Darstellung von Fernseh- bzw. Filmdaten auf dem Display vom Prüfmittel nur dann als zulässig signalisiert wird, wenn das Fahrzeug sich im Stillstand befindet.

11. Anzeigevorrichtung nach einem der Ansprüche 1 bis 10, wobei wenigstens eine Position von Schwenkmittel und Display im Bereich des Armaturenbretts vorgesehen ist.

12. Anzeigevorrichtung nach Anspruch 11, wobei das Display zumindest teilweise im Armaturenbrett versenkbar ist.

13. Anzeigevorrichtung nach einem der Ansprüche 1 bis 10, wobei wenigstens eine Position von Schwenkmittel und Display im Bereich des Fahrzeughimmels vorgesehen ist.

14. Anzeigevorrichtung nach einem der Ansprüche 1 bis 13, wobei die Schwenkmittel für ein Verrücken des Displays in den Bereich des Lenkrades ausgebildet sind und zusätzlich eine dem Display zugeordnete Eingabetastatur in den Bereich des Lenkrades versetzbar ist.

15. Verfahren zur Anzeige von Daten von Applikationen für einen Fahrzeugnutzer, wobei die Daten auf einem Display dargestellt werden, welches zwischen wenigstens zwei Positionen unter Verwendung von Schwenkmitteln verrückbar ist,
wobei, nachdem der Fahrzeugnutzer eine Applikation selektiert hat zuerst geprüft wird, ob die Darstellung von Daten dieser selektierten Applikation im aktuellen Fahrzeugzustand zulässig ist, **dadurch gekennzeichnet dass** bei einem positiven Ergebnis der Prüfung die Schwenkmittel freigegeben werden und das Display entsprechend der oder jeder vom Fahrzeugnutzer selektierten Applikation angesteuert wird.

## Claims

1. Display device for a vehicle, comprising a display (D), for displaying data for applications for a vehicle user, and pivoting means (M, R) for displacing the display between at least two positions, wherein the display device also includes
- check means for checking whether in the current state of the vehicle it is permissible to display data for an application selected by the vehicle user, **characterized by**
- release means for releasing the pivoting means and for actuating the display in accordance with the application, or each application, selected by the vehicle user when the check means output an affirmative signal.

2. Display device according to Claim 1, wherein the pivoting means are embodied as a housing of the display.

3. Display device according to Claim 1 or 2, wherein the pivoting means are designed to displace the display manually.

4. Display device according to one of Claims 1 to 3, wherein the pivoting means are designed to displace the display automatically.

5. Display device according to one of Claims 1 to 4, wherein the pivoting means are designed to move and/or incline and/or rotate the display.

6. Display device according to one of Claims 1 to 5, wherein operator control elements are provided on and/or at the display.

7. Display device according to one of Claims 1 to 6, wherein the display of data from driver assistance systems on the display is provided as an application.

8. Display device according to one of Claims 1 to 7, wherein the vehicle is a utility vehicle and the display has a diagonal of approximately twenty-three inches.

9. Display device according to one of Claims 1 to 8, wherein the display of television data and film data on the display is provided as an application.

10. Display device according to Claim 9, wherein the check means signals that it is permissible to display television data and film data on the display only if the vehicle is in the stationary state.

11. Display device according to one of Claims 1 to 10, wherein at least one position of the pivoting means and display is provided in the region of the dashboard.

12. Display device according to Claim 11, wherein the display can be lowered at least partially into the dashboard.

13. Display device according to one of Claims 1 to 10, wherein at least one position of the pivoting means and display is provided in the region of the inner roof lining of the vehicle.

14. Display device according to one of Claims 1 to 13, wherein the pivoting means are designed to displace the display into the vicinity of the steering wheel, and in addition an input keyboard which is associated with the display can be moved into the vicinity of the steering wheel.

15. Method for displaying data for applications for a vehicle user, wherein the data is displayed on a display which can be displaced between at least two positions using pivoting means, wherein after the vehicle user has selected an application it is firstly checked whether it is permissible to display data for this selected application in the current state of the vehicle, **characterized in that** in the event of a positive result of the check the pivoting means are released and the display is actuated in accordance with the application, or each application, selected by the vehicle user.

## Revendications

1. Dispositif d'affichage pour un véhicule, comprenant un afficheur (D) pour représenter des données d'applications pour un utilisateur de véhicule, et des moyens de pivotement (M, R) pour déplacer l'afficheur entre au moins deux positions, sachant que le dispositif d'affichage comprend en outre des moyens de contrôle pour contrôler si la représentation de données d'une application sélectionnée par l'utilisateur du véhicule est admissible dans l'état actuel du véhicule, **caractérisé par** des moyens de libération pour libérer les moyens de pivotement et pour asservir l'afficheur en fonction de l'application ou de chaque application sélectionnée par l'utilisateur du véhicule, si les moyens de contrôle délivrent un signal d'acquiescement.

2. Dispositif d'affichage selon la revendication 1, sachant que les moyens de pivotement sont réalisés sous forme de boîtier de l'afficheur.

3. Dispositif d'affichage selon la revendication 1 ou 2, sachant que les moyens de pivotement sont conçus pour un déplacement manuel de l'afficheur.

4. Dispositif d'affichage selon l'une quelconque des revendications 1 à 3, sachant que les moyens de pivotement sont conçus pour un déplacement automatique de l'afficheur.

5. Dispositif d'affichage selon l'une quelconque des revendications 1 à 4, sachant que les moyens de pivotement sont conçus pour déplacer en translation et/ou pour incliner et/ou pour faire tourner l'afficheur.

6. Dispositif d'affichage selon l'une quelconque des revendications 1 à 5, sachant que des éléments de manoeuvre sont prévus sur l'afficheur et/ou pour l'afficheur.

7. Dispositif d'affichage selon l'une quelconque des revendications 1 à 6, sachant qu'est prévue comme application la représentation sur l'afficheur de données de systèmes d'assistance du conducteur.

8. Dispositif d'affichage selon l'une quelconque des revendications 1 à 7, sachant que le véhicule est un véhicule utilitaire et que l'afficheur présente une diagonale d'environ vingt-trois pouces.

9. Dispositif d'affichage selon l'une quelconque des revendications 1 à 8, sachant qu'est prévue comme application la représentation sur l'afficheur de données de télévision et/ou de cinéma.

10. Dispositif d'affichage selon la revendication 9, sachant que la représentation de données de télévision et/ou de cinéma sur l'afficheur n'est signalée comme admissible par le moyen de contrôle que si le véhicule se trouve à l'arrêt.

11. Dispositif d'affichage selon l'une quelconque des revendications 1 à 10, sachant qu'au moins une position des moyens de pivotement et de l'afficheur est prévue dans la région du tableau de bord.

12. Dispositif d'affichage selon la revendication 11, sachant que l'afficheur peut être au moins partiellement escamoté dans le tableau de bord.

13. Dispositif d'affichage selon l'une quelconque des revendications 1 à 10, sachant qu'au moins une position des moyens de pivotement et de l'afficheur est prévue dans la région de l'habillage de plafond.

14. Dispositif d'affichage selon l'une quelconque des revendications 1 à 13, sachant que les moyens de pivotement sont conçus pour un déplacement de l'afficheur dans la région du volant de direction et qu'en outre un clavier de saisie associé à l'afficheur peut être déplacé dans la région du volant de direction.

15. Procédé d'affichage de données d'applications pour un utilisateur de véhicule, sachant que les données sont représentées sur un afficheur qui peut être déplacé entre au moins deux positions en utilisant des moyens de pivotement, sachant qu'après que l'utilisateur du véhicule ait sélectionné une application, on contrôle d'abord si la représentation de données de cette application sélectionnée est admissible dans l'état actuel du véhicule, **caractérisé en ce que**, en cas de résultat positif du contrôle, les moyens de pivotement sont libérés et l'afficheur est asservi en fonction de l'application ou de chaque application sélectionnée par l'utilisateur du véhicule.
